Europäisches Patentamt

European Patent Office

Office européen des brevets

(19)

(11) Publication number: **0 203 413**
**A1**

# EUROPEAN PATENT APPLICATION

(21) Application number: **86106061.4**

(22) Date of filing: **02.05.86**

(51) Int. Cl.⁴: **A 01 N 27/00**

(30) Priority: **01.05.85 US 729337**

(43) Date of publication of application: **03.12.86**
**Bulletin 86/49**

(84) Designated Contracting States: **AT BE CH DE FR GB IT LI
LU NL SE**

(71) Applicant: **S.C. JOHNSON & SON, INC., 1525 Howe
Street, Racine, Wisconsin 53403 (US)**

(72) Inventor: **Hildebrandt, Donald W., 3301 Wheelock Dr.,
Racine Wisconsin 53405 (US)**
Inventor: **Keyel, Richard E., 1117 Augusta St., Racine
Wisconsin 53402 (US)**

(74) Representative: **Baillie, Iain Cameron et al, c/o Ladas &
Parry Isartorplatz 5, D-8000 München 2 (DE)**

(54) **Attractive insecticidal bait.**

(57)    A method for control of insects from the family Vespidae.
It has been discovered that (Z)-9-tricosene, (Z)-9-heneicosene
and the saturated hydrocarbons tricosane and tridecane act as
kairomones for the family Vespidae to locate its prey, the
house fly. By incorporating these materials as attractants in a
proteinaceous matrix having a delayed toxicant, control over
colonies of Vespidae may be achieved.

CHAIN LENGTH (# OF CARBONS)

TITLE

ATTRACTIVE INSECTICIDAL BAIT

BACKGROUND OF THE INVENTION:

FIELD OF THE INVENTION

This invention relates to compositions useful in
attracting insects of the family Vespidae and most
particularly yellowjacket wasps, to a bait containing a
toxicant which may have delayed toxicity and which is
adapted to be carried back to the nest of the yellow
jacket wasps for contamination and eradication of the nest
itself. The primary attractive compounds in the
attractive insecticidal bait of the present invention are
synthesized and natural versions of a naturally occurring
long chain hydrocarbon known as (Z)-9-tricosene and
related compounds such as (Z)-9-heneicosene and
tricosane. The naturally occurring long chain
hydrocarbons are both saturated and unsaturated aliphatic
compounds having a carbon content of $C_5$ to $C_{33}$ and
particularly $C_8$ to $C_{23}$. These compounds are
semiochemicals which are the sex pheromones of the common

-2-

house fly Musca domestica which serve as allelochemics and specifically serve as kairomones for the predatory yellowjacket wasps. This discovery of incorporating (Z)-9-tricosene and its homologs into a system containing a toxic base bait offers a new means for controlling yellowjacket wasps in areas where their presence is considered to be a nuisance.

Semiochemicals are naturally occurring chemicals given off by insects and other arthropods which serve as chemical communicants. Semiochemicals are divided into two broad groups, pheromones and allelochemics, depending on whether the interactions are intraspecific or interspecific, respectively. It is not unknown for a semiochemical to serve as a pheromone as between members of the same species and allelochemic as between members of different species. It has been discovered in the present invention that the chemical pheromones (Z)-9-tricosene and (Z)-9-heneicosene, as well as tricosane, tridecane and other long chain hydrocarbons, both saturated and unsaturated having a carbon content of $C_5$ to $C_{33}$, and particularly $C_8$ to $C_{23}$, will serve as an attractant for the yellowjackets of the family Vespidae, and more particularly for Vespula flavopilosa, Vespula germanica, Vespula maculifrons, Vespula squamosa, Vespula vulgaris and Vespula pensylvanica. Thus, it may be seen that (Z)-9-tricosene, (Z)-9-heneicosene and tricosane act as allelochemics and more particularly as kairomones for the yellowjacket wasp to allow the yellowjacket to locate its intended prey, namely the house fly.

Kinzer et al U.S. patent 4,122,165 relates to an insecticidal composition for the control of Diptera such as Musca domestica, comprising a (cis)-9-tricosene as the

-3-

attractant and methomyl as the toxicant with a carrier
substance.  It is taught by Kinzer that by the use of the
sex pheromone (cis)-9-tricosene, Diptera are attracted to
the methomyl toxicant and eradicated or at least
controlled.

Kinzer differs from the present invention in that Kinzer
utilizes the well known theory of use of a pheromone in
its classical definition; namely, as an attractant which
is intraspecific with a given species.  Kinzer does not
recognize nor does he teach the use of the naturally
occurring pheromone (cis)-9-tricosene as an allelochemic
and more specifically as a kairomone whereby an
interspecific response is illicited as between different
species of insects.  Moreover, Kinzer does not recognize
that a variety of chemicals may be used to illicit a
response from both the common house fly and its predator,
the yellowjacket wasp.  In addition, Kinzer does not
recognize the action of (Z)-9-heneicosene, tricosane,
tridecane and mixture thereof as well as a number of other
saturated and unsaturated aliphatic hydrocarbons having a
carbon content of $C_5$ to $C_{33}$ and more particularly $C_8$
to $C_{23}$ as allelochemics for the control of insect
pests.

The present invention is concerned with the use of the
pheromones (Z)-9-tricosene as well as tricosane, tridecane
(Z)-9-heneicosene and mixtures thereof for use as a
kairomone for a cross species attraction between the
yellowjacket wasp and the trap or attractant toxicant.  It
is obvious to those skilled in the art that IUPAC has
adopted new nomenclature and that cis is now identified by

-4-

zusammen (Z) and trans is identified by entgagen (E). The toxicant may be in a powdered form or incorporated into a bait whereby the insect becomes attracted to the toxicant and becomes infected with the toxicant or carries the toxicant back to the nest where it is spread throughout the nest and eradicates the members of the colony. In the alternative, it may be seen that by coating traps with (Z)-9-tricosene, or other attractants, good control may be had over yellowjackets in the area.

## SUMMARY OF THE INVENTION

This invention consists of a suitable matrix which is acceptable for ingestion by wasps, or for transfer to a wasp nest, by foraging members of the colony. Attractant compounds include, but are not to be limited to, (Z)-9-tricosene, Z-(9)-heneicosene, tricosane, and tridecanes. It should be noted that it has been determined that saturated and unsaturated aliphatic compounds having a carbon content of $C_5$ to $C_{33}$ and particularly $C_8$ to $C_{23}$ have proven useful in attracting yellowjacket wasps to traps. Thus, although the four chemicals specifically named are preferred, they are not in any way to be construed as limiting as to the compounds which are useful in the present invention. Moreover, it is not critical as to the amount of attractant present. Rather the attractant may be used in any amount sufficient to attract pestiferous wasps.

Toxicants which may be useful in this invention are those which will not adversely affect the attractiveness of the bait and neither will they interact with the (Z)-9-tricosene or (Z)-9-heneicosene or tricosane or tridecane, and mixtures thereof, such that the wasps are unable to detect its presence thereby insuring the effectiveness of the toxicant and

-5-

attractant combination.  A variety of matrix materials may also be employed as a carrier for the toxicant.

The invention may also include a bait matrix which is conducive to being transported back to the nest by the foraging insects. In addition to the toxic ingestion of amounts of this attractant bait, the use of additional toxic material in the form of dust or powder together with the attractant described will serve to increase the total killing power of the formulation, especially as the insect touches the bait with parts of its body or appendages in addition to its mouth parts.  It would be expected that such dust or powder as well as material ingested by foragers would be transported back to the nest where killing of the nest dwellers would occur as the infected insect undertakes social conduct within the colony. Further, it must be assumed that the toxicant should necessarily have some delayed toxicity to allow its transport back to the nest by the foraging members of the colony.  Thus, instantaneous death of the foragers at the actual trap itself is not the most desirable method in which to eradicate the nest.

Finally, it is conceivable that the attractant may be placed within a trap which allows the insects to enter but prevents their exit.  In this manner, the foraging power of the colony is reduced thereby achieving some degree of control over the colony.

It is an object of the present invention to control the population of insects of the family Vespidae in a given area by use of semiochemicals which are allelochemic kairomones for these particular insects.

It is another object of this invention to provide an attractant on a carrier matrix base which attracts the insects of the family Vespidae to a matrix base of proteinaceous material acceptable to the insects and impregnated with a toxicant to destroy the foraging members of the colony.

It is another object of the invention to provide an attractant on a carrier base impregnated with a toxicant having delayed toxicity such that the foraging members of the colony become infected with poison and transport the poison back to the colony, thereby infecting and eradicating the entire colony.

Other objects of the invention will become apparent to those skilled in the art by reading of the specification.

BRIEF DESCRIPTION OF THE DRAWINGS

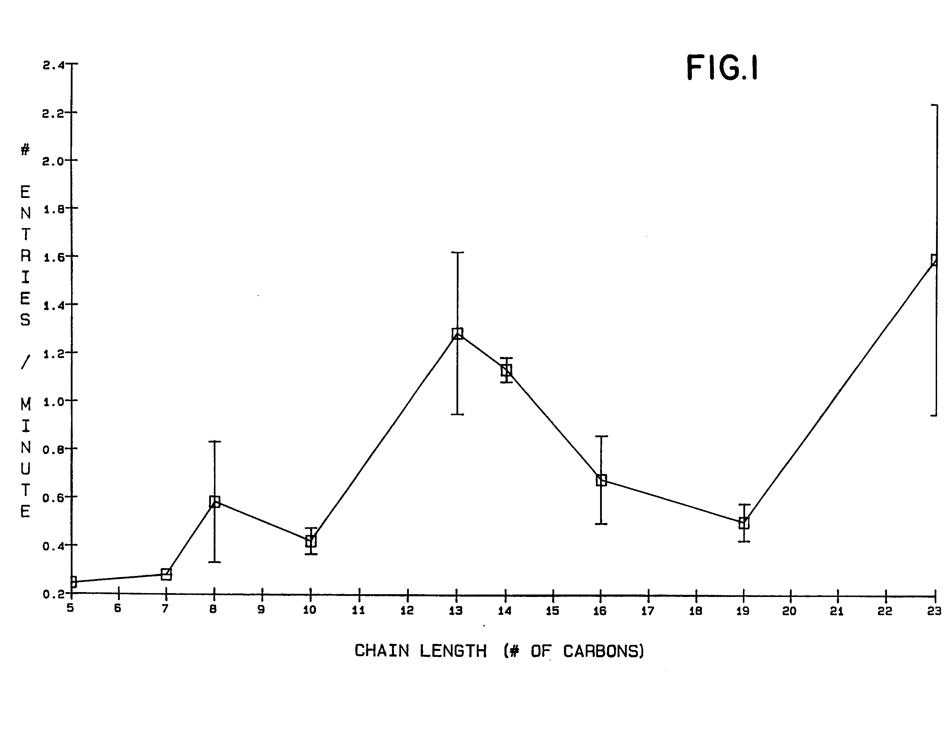

Figure 1 is a graph depicting the number of yellowjackets attracted to bottles containing saturated hydrocarbons of varying chain length.

DETAILED DESCRIPTION OF THE PREFERRED EMBODIMENT

This invention is directed to a highly effective attractant insecticidal composition for insects of the family Vespidae and particularly Vespula germanica, Vespula pensylvanica, Vespula squamosa, Vespula flavopilosa, and Vespula maculifrons.

More particularly, this invention relates to a novel composition comprising (Z)-9-tricosene, or (Z)-9-heneicosene tricosane or tridecane, either alone or in combination, and a toxicant having delayed toxicity on a matrix carrier base adaptable to be carried by the foraging members of the wasp colony back to the nest for infection of the entire colony with the toxicant. The composition is preferably (Z)-9-tricosene as the attractant in combination with a proteinaceous material which carries a toxicant having delayed toxicity and preferably an insect growth regulator (IGR). It has been found that the (cis)-9-tricosene acts as an allelochemic kairomone for the yellowjacket wasps and attracts them to the proteinaceous carrier bait material which is laced with any toxicant having a delayed toxicity such as methoprene insect growth regulator, amdro, encapsulated diazinon, organophosphorus compounds or any other toxicant for Hymenoptera having delayed toxicity.

Although the art knows that (cis)-9-tricosene is a sex pheromone of Musca domestica and has been used in combination with insecticides for the control of dipteran insects, the effectiveness of the present composition for control of insects of the family Vespidae and particularly Vespula flavopilosa, Vespula vulgaris, Vespula germanica, Vespula squamosa and Vespula maculifrons is unexpected and could not have been predicted from the prior art.

The attractive pheromone which is to act as a kairomone is a saturated and unsaturated hydrocarbon selected from those having a carbon length of from about $C_5$ to about $C_{33}$ and more particulary from about $C_8$ to about $C_{23}$. The attractant may be extracted from the cutaneous material of the common house fly or from the feces of the house fly. The pheromone is extracted from the cutaneous material or the feces of the animal by suspending the finely ground materials in a liquid and filtering the material through filter chromography whereby the various constituents of the cutaneous material filter to different places in the filter paper. The suitable pheromone or other saturated or unsaturated aliphatic hydrocarbon compounds may then be separated and removed from the filter paper by conventional distillation process by suspension of the filter paper in a suitable solvent such as hexane, heptane, pentane and the like, to leach the compound from the filter paper and then by evaporation of the solvent to leave the compounds desired.

More preferably, a solvent as described above may be applied to the cuticle of the insect to dissolve the desired hydrocarbons into solution. The solvent is then evaporated, leaving the precipitate which is subjected to gas chromatograph readout analysis to isolate and separate the desired hycrocarbons for use in the present invention. Most preferably, the attractant (Z)-9-tricosene is commercially available from Zoecon under the tradename "MUSCAMONE" and all the hydrocarbons within the range specified are commercially available from the Aldrich Company. The compounds may be mixed together or used separately and are preferably placed within a preferably proteinaceous matrix bait compound which is suitable to be carried back to the nest.

The matrix bait is preferably impregnated with a toxicant such as an organophosphorus or other toxicant exhibiting delayed toxicity so that the foraging members of the colony are attracted to the poisoned bait and carry it back with them to the nest where it is fed to the other members of colony, thereby controlling or eradicating the entire colony. It is further contemplated that a suitable amount of the attractant kairomone may be used in conjunction with a powdered pesticide exhibiting delayed toxicity such that the foraging members of the colony are attracted to the trap, where they come in contact with the powdered pesticide. They then travel back to the nest, where they carry the powdered toxicant back with them along their feet and undersides which have contacted the pesticide, to contaminate the nest. Upon grooming themselves
or other members of the community, the toxicant is spread
thereby eradicating or controlling the colony.

The organophosphorus compounds are selected from the group
consisting of phosphates, phosphorothioates, phosphorothionates
and the like. Examples are O-O-Diethyl-O-(3,5,6-trichloro-
2-pyridyl) phosphorothionates known under the tradename
Chlorpyrifos, O-O-Diethyl-O-(2-isopropyl-6-methyl-5-
pyrimidinyl) phosphorothioate known under the tradename
Diazanon, O-O-Dimethyl-O-(3-methyl-4-nitrophenyl)
phosphorothioate known under the tradename Fenitrothion,
2-Diethylamino-6-methylpyrimidin-4-yl dimethyl phosphorothioate
known under the tradename Pirimiphos Methyl, O,O-Dimethyl-O-(3-
methyl-4-(methylthio)phenyl) phosphorothioate known under the
tradename Fenthion, (Diethoxy-thiophosphoryloxyimino)-phenyl
acetonitrile known under the tradename Phoxim, O-S-Dimethyl
acetylphosphoramidothioate known under the tradename Acephate,
O-2-methylcarbonyl-1-propenyl O,O-dimethyl phosphorothioate
known under the tradename Methacrifos, and the like.

The carbamates may be selected from the group consisting of
2-(1-methylethoxy)phenyl methylcarbamate known under the
tradename Propoxur, 2,2-Dimethyl-1,3-benzodioxol-4-yl-N-methyl
carbamate known under the tradename Ficam, 2-(1,3-dioxalon-2-yl)
phenyl methyl carbamate, known under the tradename Famids,
1-napthyl methylcarbamate known under the tradename Sevin, and
the like.

The inorganic toxicants may be selected from the group
consisting of boric acid, sodium borate, silica gel, arsenic
compounds, and the like.

-10-

The insect growth regulators which may be incorporated into the foam carrier of the present invention include methoprene, Isopropyl (E,E)-11-methoxy-3,7,11-trimethyl-2,4-dodecadienoate. By the use of insect growth regulators, it may prove possible to interrupt the life cycle of the insects, thereby controlling the colony. Thus, the use of this type of toxicant would have its desired effect in a long term fashion whereby the colony, unable to propogate, would decline in population.

The only restriction to be placed on the toxicants used in the present invention is that they should not be repellent to the insect to be controlled. Thus, pyrethroids are not expected to perform well due to their repellency action.

Finally, the attractant can be used in a trap whereby the kairomone is placed within a trap so the insects may enter the trap and are unable to escape. Thus, the trap would fill up with insects which would die of dessication or starvation after a few days thereby weakening the foraging ability of the colony and establishing a degree of control over those colonies.

The following examples are offered to illustrate the effectiveness of the present invention, and are not to be construed as limiting the scope or spirit of the invention.

In each of the examples I and II, treated pieces of filter paper (1 cm x 2 cm) were placed in bottles in a yellowjacket cage and compared with bottles with filter paper but no treatment. There was an average of 0.41 wasps/minute (standard error = 0.10) entering bottles with the untreated filter paper as compared to 1.26 wasps/minute (standard error = 0.32) entering bottles with 5 microliters of (Z)-9-tricosene. This data is from 10 tests total including 2 nests of Vespula

-11-

*germanica*, and 1 nest each of <u>Vespula flavopilosa</u> and <u>Vespula maculifrons</u>. The differences are highly significant by the paired t-test (P = 0.002, where anything lower than 0.05 is considered significant).

EXAMPLE I

The data for saturated hydrocarbons are shown in the graph of Figure 1. Y axis shows the number of entries per minute. The values for $C_{13}$, $C_{16}$ and $C_{23}$ are significantly greater than those of the blank (Dunnett's multiple range test in one-way analysis of variance, P 0.05).

EXAMPLE II

(Z)-9-heneicosene was tested against decane $C_{10}$ which possesses essentially the same activity as the blank. In this case, the number of wasps in the bottle was counted instantaneously at selected time intervals. Filter papers treated with decane had 0.56 wasps at any one time (standard error = 0.25, N=18) vs 1.33 wasps (standard error = 0.27) in bottles with filter papers treated with (Z)-9-heneicosene. These differences are significant by the chi-square test (P=0.016).

EXAMPLE III

(Z)-9-tricosene was tested in the field by diluting the tricosene 1:1 with octane and adding 4 drops each to paper wrapped around 20 containers of 60 ml volume. 10 additional, similar containers without tricosene were also prepared. 10 locations were chosen at random. At each location, one treated container and one untreated container were placed 8 meters apart. The containers were checked at regular intervals and

-12-

the number and species of insects on each container were
recorded. On the average, 0.54 containers without tricosene
were found per hour by Vespula germanica. 1.62 containers with
tricosene were found per hour. The number of individuals on a
container without tricosene increased at the rate of 0.13
individuals per container per hour. The rate of increase on
containers with tricosene was 0.41 individuals per container
per hour.

Other modifications of the invention will be apparent to those
skilled in the art in light of the foregoing description
without departing from the scope or spirit of the present
invention. All alternative modifications and variations of the
present invention which would follow in the spirit and broad
scope of the appended claims are included.

-13-

IN THE CLAIMS

1.   A method for control of pestiferous wasp colonies of the family Vespidae using sex pheromones of female Musca domestica as kairomones, said method comprising:

   a)   concentrating, said pheromones in an amount sufficient to attract pestiferous wasps, in close proximity to a means to destroy the wasps.

2.   The method of claim 1, wherein said pheromones are hydrocarbons having a carbon content of $C_5$ to $C_{33}$.

3.   The method of claim 2, wherein said pheromones are hydrocarbons selected from the group consisting of (Z)-9-tricosene, (Z)-9-heneicosene, tricosane, tridecane and mixtures thereof.

4.   The method of claim 3, wherein said means to destroy the wasps is a trap designed to allow the insect to enter the trap and prevents its exit from the tray whereby the wasps, attracted by the kairomones, enter the traps, are unable to exit and die of starvation, thereby weakening the foraging power of the colony and establishing a degree of control over said colony.

5.   A method for control of pestiferous wasp colonies of the family Vespidae using sex pheromones of female Musca domestica as attractant kairomones, said method comprising:

   a)   placing selected said pheromones which are hydrocarbons having a carbon content of about $C_5$ to $C_{33}$, in an amount sufficient to attract said wasps in close proximity to a proteinaceous matrix bait to act as an attractant to said pestiferous wasps, said matrix further

-14-

impregnated with a non-repellant toxicant having
delayed toxicity, said matrix bait adapted to be
carried back by said wasps to said colony.

6. The method of claim 5 wherein said hydrocarbons
have a carbon content of about $C_8$ to $C_{23}$.

7. The method of claim 6, wherein said pestiferous
wasps are selected from the group consisting of Vespula
germanica, Vespula pensylvanica, Vespula flavopilosa, Vespula
maculifrons, Vespula squamosa and Vespula vulgaris.

8. The method of claim 7, wherein said hydrocarbons
are pheromones selected from the group consisting of
(Z)-9-tricosene, (Z)-9-heneicosene, tricosane, tridecane and
mixtures thereof.

9. The method of claim 8, wherein said toxicants are
selected from the group consisting of organophosphorus
toxicants, carbamates, inorganic toxicants, and insect growth
regulators.

10. The method of claim 9, wherein said
organophosphorus toxicants are selected from the group
consisting of O-O-Diethyl-O-(3,5,6-trichloro-2-
pyridyl)phosphorothioate, O-O-Diethyl-O-(2-isopropyl-6-methyl-
5-pyremedinyl) phosphorothioate, O-O-dimethyl-o-(3-methyl-4-
nitro phenyl phosphorothioate, 2-Diethylamino-6-methyl
pyrimidin-4-yl dimethyl phosphorothioate, O,O-Dimethyl-O-
(3-methyl-4-(methylthio)phenyl)phosphorothioate,
(Diethoxyl-thiophosphoryloxyimino)-phenyl acetonitrile,
O,S-dimethyl acetylphosphoramidothioate, O,Z-methyl
carbonyl-1-propenyl O,O-dimethyl phosphorothionate, and the
like.

11. The method of claim 9, wherein said carbamates are selected from the group consisting of 2-(1-methylethoxy)phenyl methylcarbamate, 2,2-Diemethyl-1,3-benzo-dioxal-4-yl methyl carbamate, 2-(1,3 dioxolan-2-yl)phenyl methyl carbamate, 1-napthyl methylcarbamate, and the like.

12. The method of claim 9, wherein said inorganic toxicants are selected from the group consisting of boric acid, sodium borate, silica gel, arsenic compounds, and the like.

13. The method of claim 9, wherein said insect growth regulators are selected from the group consisting of methoprene isopropyl (E,E)-11-methoxy-3,7,11-trimethyl-2,4-dodecadienoate and hydroprene ethyl (E,E)-3,7,11-trimethyl-2,4-dodecadienoate.

14. A method for control of pestiferous wasp colonies of the family Vespidae using sex pheromones of female _Musca domestica_ as attractant kairomones, said method comprising:
   a)   interspersing saturated and unsaturated hydrocarbons having a carbon content of about $C_5$ to $C_{33}$, in an amount sufficient to attract said wasps among a powdered nonrepellant toxicant having delayed toxicity, said hydrocarbons acting as kairomones to said pestiferous wasps.

15. The method of claim 14, wherein said hydrocarbons have a carbon content of about $C_8$ to $C_{23}$.

16. The method of claim 15 wherein said pestiferous wasps are selected from the group consisting of _Vespula germanica_, _Vespula pensylvanica_, _Vespula flavopilosa_, _Vespula maculifrons_, _Vespula squamosa_ and _Vespula vulgaris_.

17. The method of claim 16, wherein said hydrocarbons are selected from the group consisting of (Z)-9-tricosene, (Z)-9-heneicosene, tricosane, tridecane and mixtures thereof.

18. The method of claim 17, wherein said toxicants are selected from the group consisting of organophosphorus toxicants, carbamates, inorganic toxicants and insect growth regulators.

19. The method of claim 18, wherein said organophosphorus toxicants are selected from the group consisting of O-O-Diethyl-O-(3,5,6-trichloro-2-pyridyl)phosphorothioate, O-O-Diethyl-O-(2-isopropyl-6-methyl-5-pyremedinyl)phosphorothioate, O-O-Dimethyl-O-(3-methyl-4-nitro phenyl phosphorothioate, 2-Diethylamino-6-methylpyrimidin-4-yl dimethyl phosphorothioate, O-O-Dimethyl-O-(3-methyl-4-(methylthio)phenyl)phosphorothioate, (Diethoxy-thiophosphoryloxyimino)-phenyl acetonitrile, O,S-Dimethyl acetylphosphoramidothioate, O-2-methyl carbonyl-1-propenyl O,O-dimethyl phosphorothionate, and the like.

20. The method of claim 19, wherein said carbamates are selected from the group consisting of 2-(1-methylethoxy)phenyl methyl carbamate, 2,2-Diemethyl-1,3-benzo-dioxol-4-yl methyl carbamate, 2-(1,3 dioxalan-2-yl) phenyl methyl carbamate, 1-napthyl methylcarbamate, and the like.

21. The method of claim 20, wherein said inorganic toxicants are selected from the group consisting of boric acid, sodium borate, silica gel arsenic compounds and the like.

0203413

-17-

22. The method of claim 21, wherein said insect growth regulators are selected from the group consisting of methoprene isopropyl (E,E)-11-methoxy-3,7,11-trimethyl-2,4-dodecadienoate and hydroprene ethyl (E,E)-3,7,11-trimethyl-2,4 dodecadienoate.

23. An insecticidal bait composition for controlling colonies of pestiferous wasps of the family Vespidae using sex pheromones of female _Musca domestica_ as attractant kairomones, said insecticidal bait comprising:

    a)    a proteinaceous matrix suitable to be transported by said wasps to said colony;

    b)    a non-repellent toxicant exhibiting delayed toxicity in an amount sufficient to eradicate said colony, said toxicant being selected from the group consisting of organophosphorus compounds, carbamates, inorganic toxicants, and insect growth regulators;

    c)    an attractant in an amount sufficient to attract said wasps, said attractant consisting of saturated and unsaturated hydrocarbons having a carbon content of about $C_5$ to $C_{33}$.

24. The insecticidal bait composition of claim 23 wherein said attractant has a carbon content of about $C_8$ to about $C_{23}$.

25. The insecticidal bait composition of claim 24 wherein said attractant is selected from the group consisting of (Z)-9-tricosene, (Z)-9-heneicosene, tricosane, tridecane and mixtures thereof.

26. The insecticidal bait composition of claim 25 wherein said organophosphorus toxicants are selected from the group consisting of O-O-Diethyl-O-(3,5,6-trichloro-2-pyridyl) phosphorothionates, O-O-Diethyl-O-(2-isopropyl-6-methyl-5-pyrimidinyl) phosphorothioate, 2-Diethylamino-6-methylpyrimidin-4-yl dimethyl phosphorothioate, O,O-Dimethyl-O-(3-methyl-4-(methylthio)phenyl) phosphorothioate, 2-Diethylamino-6-methylpyrimidin-4-yl dimethyl phosphorothioate, O,O-Dimethyl-O-(3-methyl-4-(methylthio)phenyl) phosphorothioate, (Diethoxy-thiophosphoryloxyimino)-phenyl acetonitrile, O,S-Dimethyl acetylphosphoramidothioate, O-2-methylcarbonyl-1-propenyl O,O-dimethyl phosphorothioate, and the like.

27. The composition of claim 25 wherein said carbamates are selected from the group consisting of 2-(1-methylethoxy)phenyl methylcarbamate, 2,2-Dimethyl-1,3-benzodioxol-4-yl-N-methyl carbamate, 2-(1,3-dioxalon-2-yl) phenyl methyl carbamatel-napthyl methylcarbamate and the like.

28. The insecticidal bait composition of claim 25, wherein said inorganic toxicants are selected from the group consisting of boric acid, sodium borate, silica gel, arsenic compounds and the like.

29. The insecticidal bait composition of claim 25, wherein said insect growth regulators are selected from the group consisting of methylprene isopropyl (E,E)-11-methoxy-3,7,11-trimethyl-2,4-dodecadienoate , and hydroprene ethyl (E,E)-3,7,11-trimethyl-2,4-dodecadienoate.

FIG.1

# ENTRIES / MINUTE

CHAIN LENGTH (# OF CARBONS)

European Patent Office

**EUROPEAN SEARCH REPORT**

0203413
Application number

EP 86 10 6061

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 005 540 (AIRWICK)<br>* Claims 1-3,10,21,23,25; page 3, lines 25-65 * | 23-29 | A 01 N 27/00 |
| A | FR-A-2 207 649 (THURON) | 23-29 | |
| A,D | US-A-4 122 165 (D.R. KINZER et al.) | 23-29 | |
| A | R. WEGLER: "Chemie der Pflanzenschutz- und Schädlingsbekämpfungsmittel", vol. 6, 9th February 1981, pages 7,8, Springer-Verlag, New York, US<br>* Page 6, last paragraph; page 7, first paragraph * | 1-29 | |
| A | US-A-3 485 868 (G.W. EDDY et al.)<br>* Abstract; column 7, lines 3-14 * | 1-29 | TECHNICAL FIELDS SEARCHED (Int. Cl.4)<br><br>A 01 N |
| A | US-A-3 717 706 (T.P. McGOVERN et al.) | 1-29 | |
| A | US-A-3 798 318 (R.H. WRIGHT) | 1-29 | |
| | --- -/- | | |

The present search report has been drawn up for all claims

| Place of search | Date of completion of the search | Examiner |
|---|---|---|
| THE HAGUE | 28-08-1986 | DECORTE D. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 803 753 (A.O. FEIGIN) <br> * Claim 1 * <br><br> ----- | 1-29 | |

TECHNICAL FIELDS SEARCHED (Int. Cl.4)

The present search report has been drawn up for all claims

| Place of search | Date of completion of the search | Examiner |
|---|---|---|
| THE HAGUE | 28-08-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82